# EUROPEAN PATENT SPECIFICATION

(11) **EP 2 383 200 B1**
(45) Date of publication and mention of the grant of the patent: **10.05.2017**
(21) Application number: 09817617.5
(22) Date of filing: 05.09.2009
(51) Int. Cl.: B65D 51/18, A61J 1/05, B29C 45/00, B29L 31/56

(54) **SYNTHETIC RESIN CAP AND METHOD OF MANUFACTURING SYNTHETIC RESIN CAP**
KUNSTHARZKAPPE UND VERFAHREN ZUR HERSTELLUNG EINER KUNSTHARZKAPPE
CAPUCHON EN RÉSINE SYNTHÉTIQUE ET SON PROCÉDÉ DE FABRICATION

(30) Priority: 30.09.2008 JP 2008255815
(43) Date of publication of application: 02.11.2011
(73) Proprietor: Daikyo Seiko, LTD., Tokyo 131-0031 (JP)
(72) Inventor: SUDO Nobuo, Tokyo 131-0031 (JP)
(74) Representative: Blodig, Wolfgang
(86) International application number: PCT/JP2009/065539
(87) International publication number: WO 2010/038580

(56) References cited:
- EP-A2- 0 769 456
- WO-A1-99/53886
- WO-A1-2005/005128
- WO-A1-2005/005128
- JP-A- 11 130 172
- JP-A- 11 130 172
- JP-A- 2000 015 661
- JP-A- 2001 071 431
- JP-T- 2002 512 084

## Description

### Technical Field

The present invention relates to a manufacturing method of a synthetic resin cap for enclosing a mouth of a vial body or syringe cartridge sealed with a plug, and also to a synthetic resin cap obtained by said method.

### Background Art

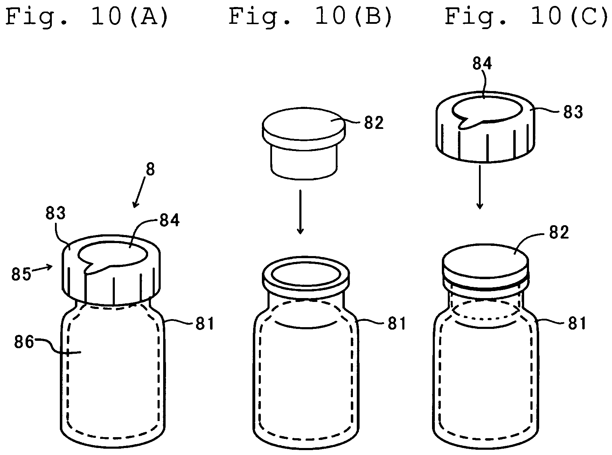

In FIG. 10 (A), an overall view of a conventional medicament-filled vial 8 is illustrated. As depicted in FIG. 10 (B), a mouth of a vial body 81 with a medicament 86 filled therein is sealed by a rubber plug (plug) 82. As shown in FIG. 10 (C), an aluminum cap ("aluminum" will hereinafter be called simply "A1") 83 for the prevention of separation of the rubber plug is further fitted such that it encloses the mouth except for a central part of a top wall of the rubber plug 82 (for the A1 cap, reference may be had to Patent Document 1). A seal 84 is bonded to a central part of a top wall of the rubber plug 82.

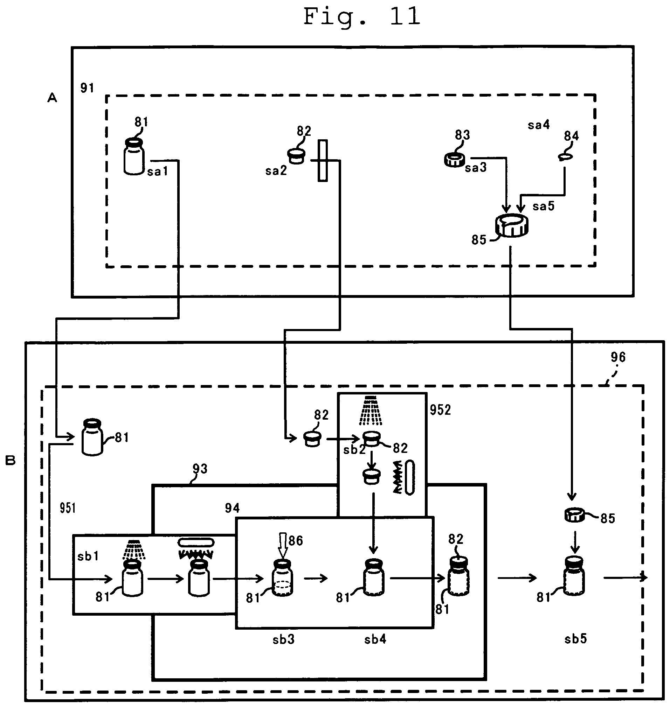

With reference to FIG. 11, a description will hereinafter be made of a manufacturing process of the medicament-filled vial 8. At a medicament container manufacturer (which will be called simply "the container manufacturer") A, the vial body 81 and rubber plug 82 are manufactured in a non-clean room 91 (steps sa1, sa2), and are packaged and supplied to a medicament manufacturer B. At the container manufacturer A, the A1 cap 83 and seal 84 are also manufactured (steps sa3,sa4), and after the bonding of the seal 84 to the A1 cap 83 (step sa5), they are shipped as a sealed Al cap 85 in a normal package to the medicament manufacturer B. Upon supplying such rubber plugs 82 and sealed Al caps 85 to the medicament manufacturer B, they are usually packaged in large bulk quantities in bags, respectively (without individual wrapping or packaging).

At the medicament manufacturer B, the drug-filled vial 8 is manufactured with the so-supplied vial body 81, rubber plug 82 and sealed A1 cap 85 in a clean room 93 as will be described hereinafter. In the example of FIG. 11, an isolator 94, washing-sterilization units 951, 952 and non-clean room 96 are arranged in the clean room 93.

As the vial body 81 and rubber plug 82 come into contact with the medicament 86, they are first washed and sterilized (sb1, sb2) in the washing-sterilization units 951,952 arranged between the non-clean room 96 and the isolator 94. Drying is also performed after the washing in sb1, sb2 but these drying steps are not illustrated in the drawing for the convenience of description. In FIG. 11, sterilization is also performed by sterilization radiation. As an alternative, this sterilization may also be performed by a sterilization gas such as water vapor, ethylene oxide or hydrogen peroxide.

Next, in the isolator 94, the medicament 86 is filled into the vial body 81 (step sb3), and the mouth is sealed by the rubber plug 82 (step sb4) Subsequently, in the non-clean room 96, the sealed A1 cap 85 is fitted on the mouth of the vial body 81 to enclose the mouth (step sb5), whereby the medicament-filled vial is manufactured.

The fitting of the Al cap 83 on the mouth of the vial body 81 (step sb6) is performed in the non-clean room 96, because the Al cap 83 was manufactured and packaged in a bag or the like in the non-clean room 91 at the container manufacturer A and contamination of the clean room 93 or isolator 94 with microparticles (dust) adhering on the Al cap 83 needs to be avoided.

### Prior Art Documents

### Patent Documents

Patent Document 1: JP-A-07-187216
Patent Document 2: JP-A-2002-512084

### Disclosure of the Invention

### Problem to Be Solved by the Invention

On the side of the medicament manufacture B, however, there is a desire to continuously perform the filling step of the medicament 86 (sb3), the sealing step of the mouth by the rubber plug 82 (sb4) and the fitting step of the sealed A1 cap 85 on the mouth of the vial body 81 (sb5) so that the manufacturing efficiency of medicament-filled vials can be improved and the sterility of the vials can be assured. There are, however, microparticles adhering on the A1 cap 83 as mentioned above, resulting in a problem that the steps sb3,sb4,sb5 cannot be performed continuously.

It seems possible to solve the above-described problem if washing is also performed on the sealed Al cap 85 at the medicament manufacturer B like the vial body 81 and rubber plug 82. Even if the sealed Al cap 85 is rendered free of microparticles (dust) by washing, however, the sealed A1 cap 85 may be contaminated again with microparticles (dust) contained in air blown in the drying step. Moreover, such sealed Al caps grind and hit against each other during the washing step and also until they are transferred to the next step, so that fine A1 particles occur from these sealed A1 caps 85. The isolator 94 will, therefore, be contaminated without doubt if the sealed A1 caps 85 are carried into the isolator 94. In addition, a potential problem arises in that the seals 84 may fall off from the sealed A1 caps 85 by agitation during the drying.

It may be contemplated to adopt, in place of such Al caps 83, synthetic resin caps that do not produce Al powder even when they grind and hit against each other. Synthetic resin caps are manufactured, for example, by injection molding, and therefore, a higher degree of freedom can be enjoyed in designing their shape and structure.

In the non-clean room 91 at the container manufacturer, the synthetic resin cap is injection-molded, and the seal is applied to the synthetic resin cap to manufacture the sealed synthetic resin cap 15. It may be contemplated to subsequently wash the sealed synthetic resin cap 15 at the medicament manufacturer to remove microparticles (dust) adhering on the synthetic resin cap (for the synthetic resin cap, reference may be had to Patent Document 2).

In the case of such a synthetic resin cap, however, its drying requires longer time because it is lower in heat resistance and drying efficiency than the sealed Al cap 85 in FIG. 10 (A). Moreover, the synthetic resin cap is prone to contamination by microparticles (dust) contained in blown air. Although not so much as Al caps , synthetic resin caps still produce fine particles as a result of grinding and hitting against each other during the washing step and until they are transferred to the nextstep. Anisolator will,therefore,becontaminated without doubt if these synthetic resin caps are carried into the isolator. In addition, like the sealed Al cap 85 in FIG. 10(A), a potential problem also arises in that the seal may fall off from the sealed synthetic resin caps by agitation during drying.

Objects of the present invention are, therefore, to provide a synthetic resin cap, which can keep a clean room or isolator free from the intrusion of microparticles (dust) even when its fitting on a mouth of a vial body is performed in the clean room or isolator, and a manufacturing method of the synthetic resin cap.

### Means for Solving the Problem

This problem is solved by the manufacturing method of claim 1 and by the cap obtained in this method.

Among possible molding processes, injection molding is most preferred for its excellent production efficiency.

In the manufacturing method, the predetermined cleanliness is set at Class M6.5 or higher (by the JIS method).

Further, synthetic resin caps manufactured by the manufacturing method can be packaged in a plural quantity in a bag for synthetic resin caps, through which sterilization radiation can transmit or a sterilization gas such as water vapor can permeate, without going through a washing step. The packaged synthetic resin caps can be sterilized while being packaged in the package.

### Advantageous Effects of the Invention

According to the present invention, no microparticles (dust) are adhering on the synthetic resin caps, and owing to the inclusion of no powdery material (especially one having a diameter of 1 mm or smaller), the occurrence of microparticles as a result of grinding and hitting of the caps themselves is extremely limited. Therefore, the interiors of vial manufacturing facilities (clean room and isolator) at a medicament manufacturer are no longer contaminated even if the synthetic resin caps are carried into the vial manufacturing facilities.

According to the present invention, the manufacturing efficiency can also be improved as it is unnecessary to wash the synthetic resin caps.

With the present invention, the synthetic resin caps can be packaged in a plural quantity in a clean bag for synthetic resin caps, through which sterilization radiation can transmit or a sterilization gas such as water vapor can permeate, and the sterilization of the synthetic resin caps can be performed while being packaged in the clean bag. As a consequence, it is possible to prevent the interiors of vial manufacturing facilities at a medicament manufacturer from contamination by microorganisms and the like adhering on the synthetic resin caps.

### Brief Description of the Drawings

[FIGS. 1 (A) and 1(B)] FIG. 1 (A) is an overall view of a medicament-filled vial, and FIG. 1 (B) is an exploded perspective view of the medicament-filled vial.
[FIG. 2] FIG. 2 is a schematic diagram showing a manner of manufacture of a cap and seal in a clean room.
[FIG. 3] FIG. 3 illustrates a first example of processing, in which each medicament-filled vial is manufactured by using the sealed cap manufactured in the step of FIG. 2.
[FIG. 4] FIG. 4 illustrates a second example of the processing, in which each medicament-filled vial is manufactured by using the sealed cap manufactured in the step of FIG. 2.
[FIG. 5] FIG. 5 is a schematic diagram showing a manner that in a clean room, caps, seals and sealed caps are manufactured and are packaged and shipped in a clean bag.
[FIG. 6] FIG. 6 is a diagram depicting an example that sealed vial caps have been packaged in a clean bag.
[FIG. 7] FIG. 7 is a schematic diagram of a first example of another processing, in which each medicament-filled vial is manufactured by using one of the sealed caps enclosed in the clean bag CB shown in FIG. 6 and performing in an isolator the filling of a medicament at a medicament manufacturer.
[FIG. 8] FIG. 8 is a schematic diagram of a second example of the another processing, in which each medicament-filled vial is manufactured by using one of the sealed caps enclosed in the clean bag CB shown in FIG. 6 and performing in the isolator the filling of the medicament at the medicament manufacturer.
[FIGS. 9 (A) and 9(B)] FIGS. 9 (A) and 9 (B) are schematic views of the present invention as applied to a syringe, in which FIG. 9 (A) is a view depicting a syringe in the form of a syringe cartridge and FIG. 9 (B) is an exploded view of a cartridge to which the present invention can be applied.
[FIGS. 10(A), 10(B) and 10(C)] FIGS. 10(A), 10(B) and 10(C) are schematic views of a conventional technology, in which FIG. 10(A) is an overall view of a medicament-filled vial, FIG. 10 (B) is a view depicting a manner of fitting of a rubber plug, and FIG. 10(C) is a view showing a manner of further fitting of an Al-made vial cap.
[FIG. 11] FIG. 11 is a diagram depicting manufacturing steps of a vial body, rubber plug and cap at a container manufacturer and medicament-filling steps at a medicament manufacturer.

### Modes for Carrying out the Invention

Embodiments of the present invention will hereinafter be described.

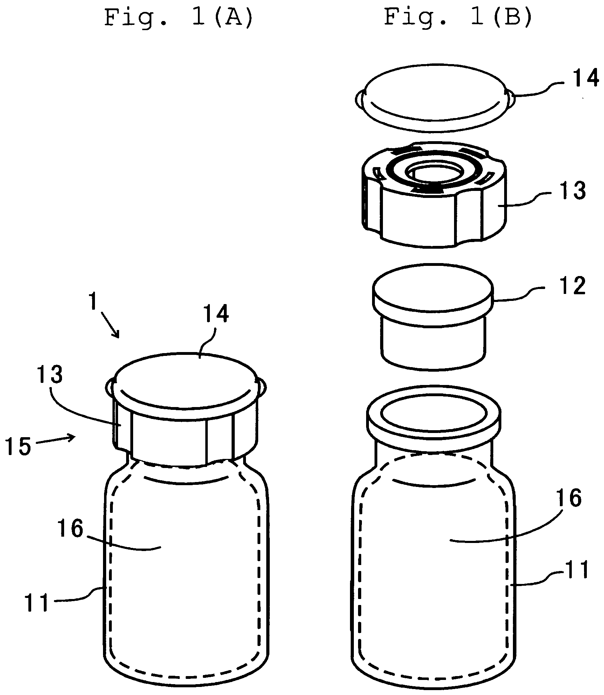

As exemplified in the overall view of FIG. 1 (A) and the exploded view of FIG. 1 (B), a medicament-filled vial 1 includes a vial body 11 filled with a medicament 16 and sealed at a mouth thereof by a rubber plug (plug) 12 (not shown in FIG. 1(A)). Further, the mouth is enclosed by a synthetic resin cap (hereinafter called simply "the cap") 13 such that the rubber plug (plug) 12 is covered. The cap 13 is open at a center thereof, and the opening is closed by a seal 14. The cap 13 with the seal 14 attached thereto will hereinafter be called "the sealed cap 15".

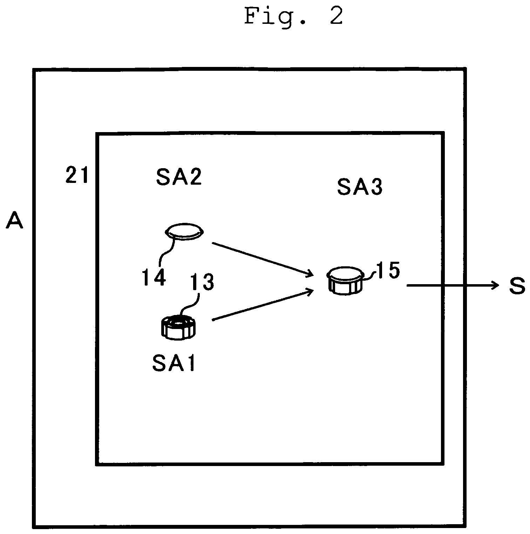

Referring to FIGS. 2 to 4, a description will be made of an embodiment in which the filling of a medicament at a medicament manufacturer B is performed in a clean room.

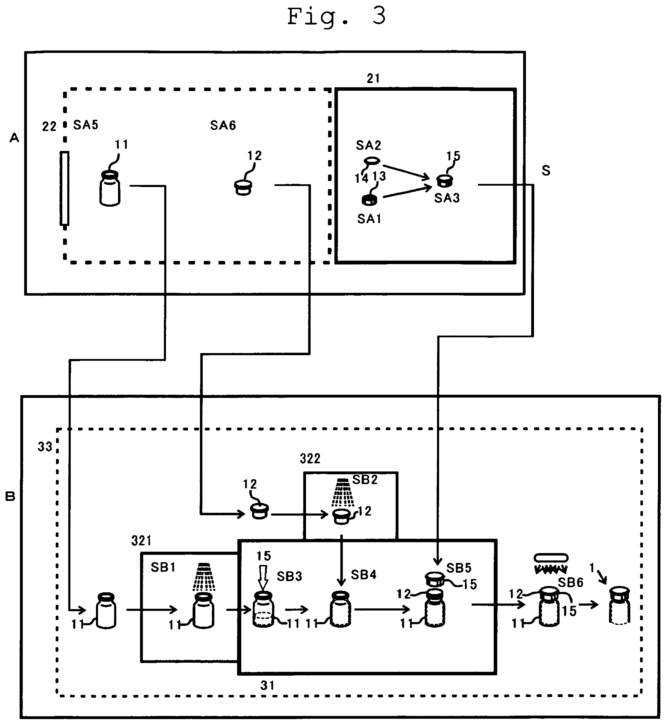

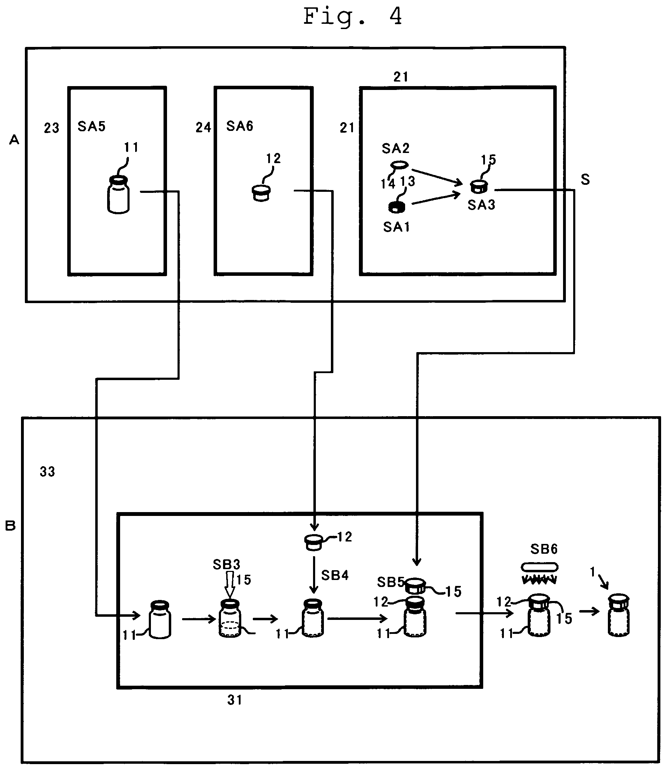

As shown in FIG. 2, the cap 13 is manufactured by injection molding in a clean room 21 (an environment of predetermined cleanliness in the present invention) at a container manufacturer A (step SA1). In this injection molding, the manufacture is performed by using a molding material - which is free of any powdery material, such as calcium carbonate, having a diameter of 1 mm or smaller in particular - under an environment of cleanliness equal to or higher than the predetermined cleanliness. It is to be noted that the term "powdery material" as used herein means a material remaining as incompatible solids in the synthetic resin in a molten state that the molding of the synthetic resin is performed or after completion of the molding. As a consequence, microparticles are no longer allowed to fall off or scatter around from a surface of the cap 13 after the molding, thereby making it possible to avoid the problem that microparticles scatter in a clean room 31 (see FIGS. 3 and 4) at the medicament manufacturer B.

As will be described subsequently herein, the cleanliness (predetermined cleanliness) of the clean room 21 is the same as the cleanliness of the clean room 31 (see FIGS. 3 and 4) at the medicament manufacturer B. In FIG. 2, the cleanliness of the clean room 31 is set at Class M6.5 (the JIS method)(the number of microparticles of 0.5 µm and greater per cubic meter is 3,530,000 or fewer).

The cap 13 can be made, for example, from PE (polyethylene) or PP (polypropylene). When sterilization radiation (electron beam, nuclear radiation or the like) is irradiated in this embodiment (see step SB6 in FIG. 3), it is preferred to make the cap 13 from PP or PE of a radiation resistance grade.

In this embodiment, the seal 14 is also manufactured by injection molding in the clean room 21 (step SA2). The material of the seal 14 is the same as that of the cap 13 in this embodiment. The seal 14 is formed in the shape of a disk as also shown in FIGS. 1 (A) and 1 (B), and can also be formed from a film. The seal 14 is attached to the cap 13 (step SA3), and is shipped as the sealed cap 15 to the medicament manufacturer B (step S).

The cap 13 and seal 14 are manufactured in the same clean room 21 in this embodiment, but can be manufactured in different clean rooms.

With reference to FIG. 3, a description will hereinafter be made of a first example of processing in which each medicament-filled vial 1 is manufactured by using the sealed cap 15 manufactured in the step of FIG. 2.

In FIG. 3, the vial body 11 and rubber plug 12 are manufactured in a non-clean room 22 at the container manufacturer A (steps SA5,SA6), and are both shipped to the medicament manufacturer B. The cap 13 and seal 14 are manufactured in the clean room 21 as shown in FIG. 2 (steps SA1,SA2). The sealed cap 15 is manufactured from these cap and seal (SA3), and is packaged and shipped (step S).

At the medicament manufacturer B, the vial body 11 and rubber plug 12 are unpacked in a non-clean room 33, the vial body 11 is forwarded to a washing unit 321, and the rubber plug 12 is forwarded to a washing unit 322. In the washing unit 321, the washing of the vial body 11 is performed, and in the washing unit 322, on the other hand, the washing of the rubber plug 12 is performed (steps SB1, SB2). Drying is also performed after these washing, but such drying steps are not illustrated in the drawing.

The washed vial body 11 and rubber plug 12 are forwarded to the clean room 31. In the clean room 31, after the filling of the medicament 16 into the vial body 11 is performed (step SB3), the sealing of the vial body 11 by the rubber plug 12 is performed (step SB4), and in the clean room 31, the sealed cap 15 is fitted on the mouth of the vial body 11 such that the mouth is enclosed (step SB5).

Subsequently, sterilization processing of the vial body 11 with the sealed cap 15 attached thereto is performed in the non-clean room 32 (step SB6). In this embodiment, the sterilization is performed by irradiation of sterilization radiation (electron beam, nuclear radiation or the like), but can also be performed by a sterilization gas such as water vapor. In general, however, the processing by sterilization radiation is preferred for its ease of operation.

By the above-described series of processing steps (steps SB1 through SB6), the medicament-filled vial 1 is manufactured.

In this embodiment, the cleanliness of the clean room 31 is set at Class M6. 5 (the JIS method) as mentioned above. However, the cleanliness of each clean room in the present invention is not limited to this cleanliness, but the present invention can be practiced in clean rooms having still higher cleanliness such as Class M4.5 or M3.5. In general, the higher the cleanliness of a clean room, the more difficult its maintenance and control, and also, the higher its cost. The cleanliness of a clean room is, therefore, determined based on a balance of required cleanliness and cost.

Referring next to FIG. 4, a description will be made of a second example of the processing in which each medicament-filled vial 1 is manufactured by using the sealed cap 15 manufactured in the step of FIG. 2. In this illustrative processing, the vial body 11 and rubber plugs 12 are also manufactured in clean rooms like the sealed cap 15 at the container manufacturer A, and the washing of the vial body 11 and rubber plug 12 is not performed at the medicament manufacturer B.

In FIG. 4, the vial body 11 and rubber plug 12 are manufactured in clean rooms 23, 24, respectively, at the container manufacturer A (steps SA5, SA6), and are both shipped to the medicament manufacturer B. The cap 13 and seal 14 are manufactured in the clean room 21 as in the case of FIG. 3 (in other words, as shown in FIG. 2) (steps SA1, SA2). The sealed cap 15 is manufactured from these cap and seal (step SA3), and is packaged and shipped to the medicament manufacturer B (step S).

At the manufacturer B, the vial body 11 and rubber plug 12 are unpacked in the clean room 31. In the clean room 31, after the filling of the medicament 16 into the vial body 11 is performed without washing (step SB3), the sealing of the vial body 11 is performed by the unwashed rubber plug 12 (step SB4), and in the clean room 31, the sealed cap 15 is fitted on the mouth of the vial body 11 such that the mouth is enclosed (step SB5) .

Subsequently, the sterilization processing of the vial body 11 with the sealed cap 15 attached thereto is performed in the non-clean room 33 (step SB6). In this embodiment, the sterilization is also performed by irradiating sterilization radiation (electron beam, nuclear radiation or the like) as in the embodiment shown in FIG. 3, but the sterilization can also be performed by a sterilization gas such as water vapor. In general, however, the processing by sterilization radiation is preferred for its ease of operation.

By the above-described series of processing steps (steps SB3 through SB6), the medicament-filled vial 1 is manufactured.

In this embodiment, the cleanliness of the clean room 31 is also set at Class M6.5 (the JIS method) as in the embodiment illustrated in FIG. 3.

In the second example of the processing as illustrated in FIG. 4, the manufacture of the medicament-filled vial 1 is simplified because neither the vial body 11 nor the rubber plug 12 is washed to say nothing of the sealed cap 15.

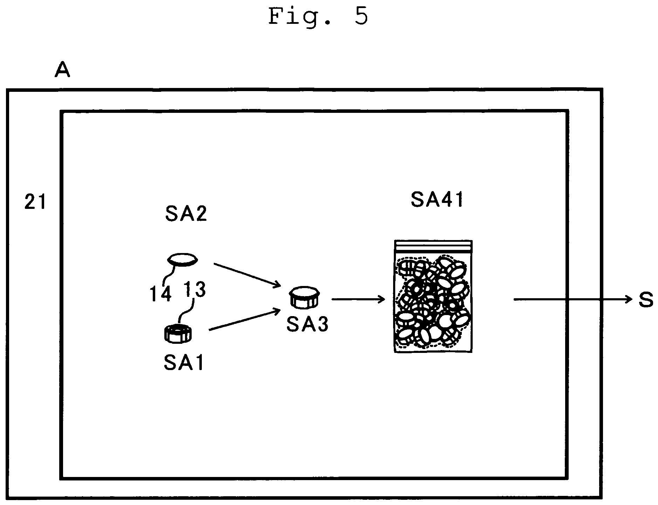

Referring now to FIGS. 5 through 8, a description will be made of an embodiment in which the filling of the medicament at the medicament manufacturer B is performed in an isolator.

As shown in FIG. 5, the cap 13 and seal 14 are manufactured in the clean room 21 at the container manufacturer A (steps SA1,SA2), and the seal 14 is attached to the cap 13 to manufacture the sealed cap 15 (step SA3).

The manufacturing processes of the cap 13 and seal 14, the material to be used in their manufacture, the cleanliness of the clean room 21, and the like are as in the embodiment of FIG. 2, and this embodiment is also similar to the embodiment of FIG. 2 in that the cap 13 and seal 14 can be manufactured in different clean rooms, respectively.

Different from the embodiment shown in FIG. 2, caps 13 with seals 14 attached thereto (sealed caps 15) are however packaged in a plural quantity in a clean bag CB in the clean room 21 at the container manufacturer A in FIG. 5 (step SA41). In FIG. 5, another clean bag CB may then be used to apply a double package.

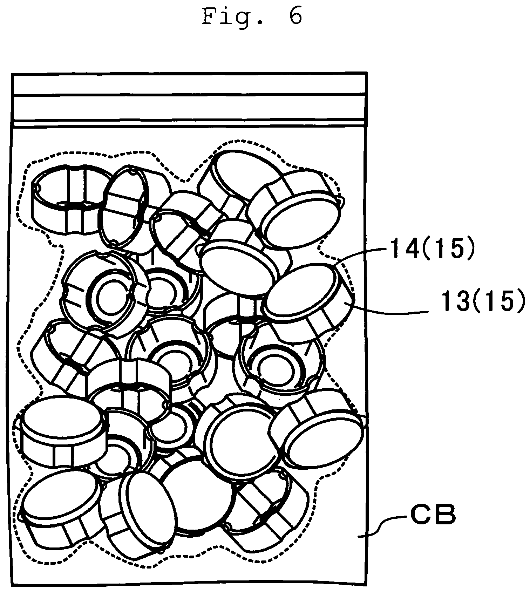

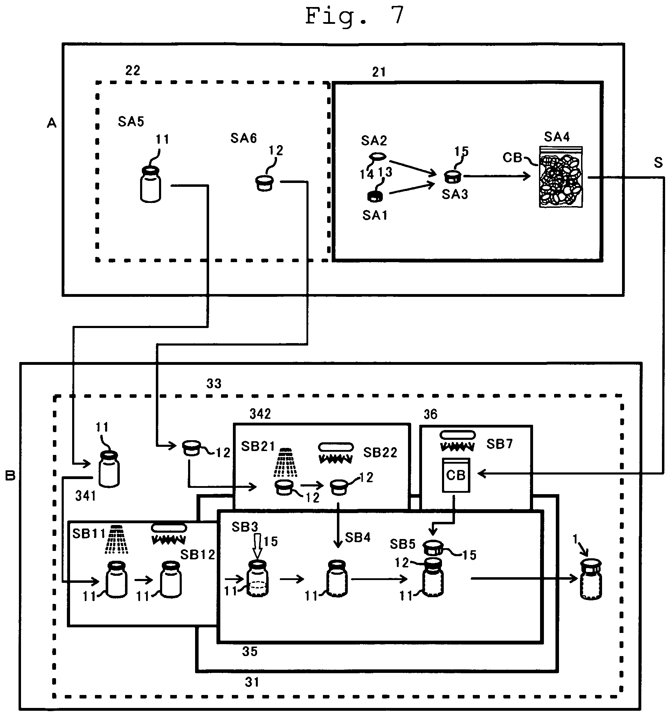

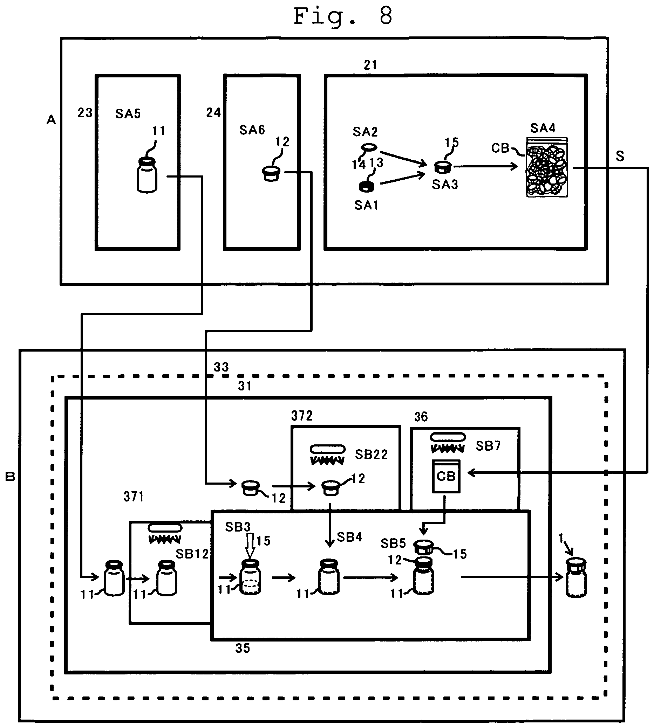

The clean bag CB can be made from PE or PP, or PE or PP of a radiation resistance grade. When sterilization is performed by a sterilization gas, a clean bag CB making combined use of PE or PP and a gas permeable material such as "TYVEK" (registered trademark) is employed. As the sealed caps 15 are subjected to sterilization processing in a state that they are packaged in the clean bag CB (see step SB7 in FIGS. 7 and 8), it is necessary to manufacture the clean bag CB from one or more materials through which sterilization radiation can transmit or a sterilization gas can permeate. In FIG. 6, one example of the clean bag CB with the sealed caps 15 packaged therein is depicted.

With reference to FIG. 7, a description will hereinafter be made of a first example of another processing in which each medicament-filled vial 1 is manufactured by using one of the sealed caps 15 packaged in the clean bag CB depicted in FIG. 6 and performing in an isolator the filling of the medicament at the medicament manufacturer B.

In FIG. 7, the vial body 11 and rubber plug 12 are manufactured in the non-clean room 22 at the container manufacturer A (steps SA5,SA6), and are both shipped to the medicament manufacturer B. The cap 13 and seal 14 are manufactured in the clean room 21 as shown in FIG. 5 (steps SA1,SA2), and the sealed cap 15 is manufactured from these cap and seal (step SA3). Such sealed caps 15 are packaged in a plural quantity in the clean bag CB, and are shipped to the medicament manufacturer B (step S).

At the manufacturer B, the vial body 11 and rubber plug 12 are unpacked in the non-clean room 33, the vial body 11 is forwarded to a washing-sterilization unit 341, and the rubber plug 12 is forwarded to a washing-sterilization unit 342.

In the washing-sterilization unit 341, the vial body 11 is subjected to washing and is then subjected to sterilization by irradiation of sterilization radiation (steps SB11, SB12), and in the washing-sterilization unit 342, on the other hand, the rubber cap 12 is subjected to washing and is then subjected to sterilization by irradiation of sterilization radiation (steps SB21,SB22). Drying is also performed after the washing, but these drying steps are not illustrated in the drawing.

The washed and sterilized, vial body 11 and rubber plug 12 are forwarded to an isolator 35. In the isolator 35, after the filling of the medicament 16 into the vial body 11 is performed (step SB3), the sealing of the vial body 11 by the rubber plug 12 is performed (step SB4).

On the other hand, the sealed caps 15 packaged in the clean bag CB and forwarded from the container manufacturer A are subjected to sterilization processing in a sterilization unit 36 while being packaged in the clean bag CB (SB7). Subsequently, one of the sealed caps 15, which have been subjected to the sterilization processing, is fitted on the mouth of the vial body 11 in the isolator 35 such that the mouth is enclosed (step SB5).

By the above-described series of processing steps (steps SB1 through SB4, SB7 and SB5), the medicament-filled vial 1 is manufactured.

In this embodiment, the cleanliness of the clean room 31 is also set at Class M6.5 (the JIS method) as mentioned above.

In FIG. 7, the cleanliness of the clean room 21 at the container manufacturer A and that of the isolator 32 at the medicament manufacturer B are both set at Class M6.5 (the JIS method). It is to be noted that sterility is assured in the isolator.

Referring to FIG. 8, a description will now be made of a second example of the another processing in which each medicament-filled vial 1 is manufactured by using one of the sealed caps 15 packaged in the clean bag CB depicted in FIG. 6 and performing in an isolator the filling of the medicament at the medicament manufacturer B.

In this illustrative processing, the vial body 11 and rubber plugs 12 are also manufactured in clean rooms like the sealed cap 15 at the container manufacturer A, and the washing of the vial body 11 and rubber plug 12 is not performed at the medicament manufacturer B.

In FIG. 8, the vial body 11 and rubber plug 12 are manufactured in the clean rooms 23,24, respectively, at the container manufacturer A (steps SA5,SA6), and are both shipped to the medicament manufacturer B. The cap 13 and seal 14 are manufactured in the clean room 21 as in the case of FIG. 7 (in other words, as shown in FIG. 5) (steps SA1, SA2), and as depicted in FIG. 6, are packaged as the sealed cap 15 in the clean bag CB and are shipped (step S).

At the manufacturer B, the vial body 11 and rubber plug 12 are unpacked in the clean room 31, and without washing, are subjected to sterilization by sterilization radiation in sterilization units 371,372, respectively (steps SB12, SB22). Subsequently, they are forwarded to the isolator 35. In the isolator 35, after the filling of the medicament 16 into the vial body 11 is performed without washing (step SB3), the sealing of the vial body 11 is performed by the unwashed rubber plug 12 (step SB4).

On the other hand, the sealed caps 15 packaged in the clean bag CB and forwarded from the container manufacturer A are subjected to sterilization processing in the sterilization unit 36 while being packaged in the clean bag CB (SB7). In the isolator 35, the sealed cap 15 which has been subjected to the sterilization processing is subsequently fitted on the mouth of the vial body 11 sealed by the rubber plug 12 such that the mouth is enclosed (step SB5).

By the above-described series of processing steps (steps SB12,SB22,SB3,SB4,SB7,SB5), the medicament-filled vial 1 is manufactured.

In this embodiment, the cleanliness of the clean room 31 is also set at Class M6.5 (the JIS method) as mentioned above. It is to be noted that sterility is assured in the isolator.

In the second example of the further processing as illustrated in FIG. 8, the manufacture of the medicament-filled vial 1 is simplified because neither the vial body 11 nor the rubber plug 12 is washed to say nothing of the sealed cap 15.

As has been mentioned above, the clean room 31 and isolator 35 at the medicament manufacturer B are not contaminated in this embodiment by microparticles (dust) which would otherwise be adhering or held on the sealed cap 15, although the sealed cap 15 is carried into the clean room 31 and isolator 35.

The present invention has been described above based on the embodiments in each of which it was applied to a cap for a vial. However, these descriptions equally apply, as they are, to caps for syringe cartridges. A description will hereinafter be made about an embodiment in which the present invention is applied to a cap for a syringe cartridge.

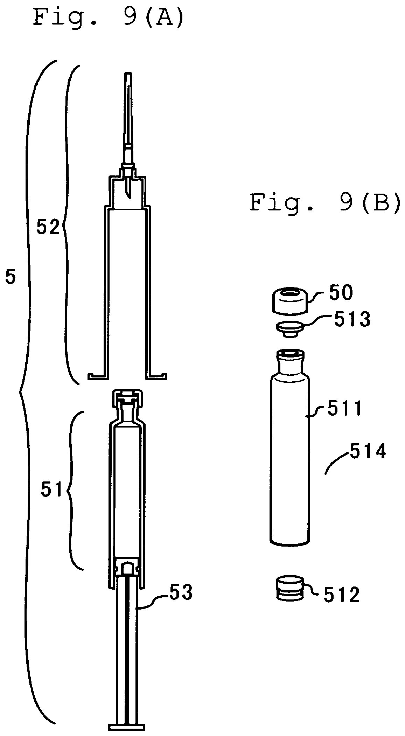

FIG. 9 (A) is the view depicting a syringe 5 in the form of a syringe cartridge, and the syringe 5 is composed of a cartridge unit (syringe cartridge) 51, cylinder unit 52, and plunger rod 53.

FIG. 9(B) is the exploded view of the cartridge unit 51, and a cylindrical body 511 is sealed at a rear end thereof (on a side opposite to a needle point side) by a piston 512 and at a forward end thereof (on a side of the cylinder unit 52) by a rubber plug 513. On the rubber plug 513, a cap 50 is fitted.

The cylindrical body 511 corresponds to the vial body 11 illustrated in FIGS. 1(A) and 1(B), the rubber plug 513 corresponds to the rubber plug 12 depicted in FIG. 1 (B), and the cap 50 corresponds to the cap 13 shown in FIGS. 1(A) and 1(B). Although not illustrated in the drawing, a seal, which corresponds to the seal 14 illustrated in FIGS. 1 (A) and 1(B), may be attached to the cap 50.

In this embodiment, the interiors of manufacturing facilities (clean room and isolator) for medicament-filled syringes at a medicament manufacturer are not contaminated by microparticles which would otherwise be adhering or held on caps 50 even when these caps are carried into the manufacturing facilities.

### Legend

1: medicament-filled vial, 5: syringe, 11: vial body, 12: rubber plug (plug), 13: cap, 14: seal, 15: sealed cap, 16: medicament, 21,23,24: clean rooms at a container manufacturer, 22: non-clean room at the container manufacturer, 31: clean room at a medicament manufacturer, 33: non-clean room at the medicament manufacturer, 35: isolator at the medicament manufacturer, 36,741,742: sterilization units, 50: cap, 51: cartridge unit, 52: cylinder unit, 53: plunger rod, 321,322: washing units, 341,342: washing-sterilization units, 511: cylindrical body, 512: piston, 513: rubber plug, A: container manufacturer, B: medicament manufacturer, CB: clean bag.

## Claims

1. A manufacturing method of a synthetic resin cap (13,50) for enclosing, under an environment of a predetermined cleanliness, a mouth of a vial body (11) or syringe cartridge (51) in which a medicament (16) is sealed by a plug (12,513), which comprises:
manufacturing the synthetic resin cap (13,50) by molding with a molding material which is free of any powdery material under an environment having cleanliness not lower than the predetermined cleanliness, wherein the predetermined cleanliness is not lower than Class M6.5 by the JIS method, and
enclosing the synthetic resin cap (13,50) in a sterilizable bag for synthetic resin caps without going through a washing step.

2. A synthetic resin cap enclosed in a sterilizable bag, obtained by the method according to claim 1.

## Patentansprüche

1. Herstellungsverfahren für eine Kappe (13,50) aus einem synthetischen Harz, um, in einer Umgebung vorbestimmter Sauberkeit, eine Öffnung eines Gefäßkörpers (11) oder einer Spritzenampulle (51) zu verschließen, in dem/der ein Medikament (16) mit einem Stopfen (12,513) verschlossen ist, umfassend Herstellen der Kappe (13,50) aus einem synthetischen Harz durch Formen mit einem Formmaterial, das frei von jedwedem pulvrigen Material ist, in einer Umgebung mit einer Sauberkeit, die nicht geringer als die vorbestimmte Sauberkeit ist, wobei die vorbestimmte Sauberkeit nicht geringer ist als Class M6.5 anhand der JIS-Methode, und
Verschließen der Kappe (13,50) aus synthetischem Harz in einer sterilisierbaren Tüte für Kappen aus synthetischem Harz, ohne einen Waschschritt zu durchlaufen.

2. Kappe aus synthetischem Harz, die in eine sterilisierbare Tüte eingeschlossen ist, erhalten durch das Verfahren gemäß Anspruch 1.

## Revendications

1. Procédé de fabrication d'un capuchon en résine synthétique (13, 50) pour entourer, dans un environnement d'une propreté déterminée, l'ouverture d'un corps de flacon (11) ou d'une cartouche de seringue (51) dans lequel un médicament (16) est placé de manière étanche grâce à un bouchon (12, 513), qui comprend les mesures consistant à :
fabriquer le capuchon en résine synthétique (13, 50) par moulage, avec un matériau de moulage sans aucune matière poudreuse, dans un environnement qui présente une propreté non inférieure à la propreté prédéterminée, ladite propreté prédéterminée n'étant pas inférieure à la classe M6.5 selon la norme JIS, et
enfermer le capuchon en résine synthétique (13, 50) dans un sachet stérilisable pour capuchons en résine synthétique, sans passer par une étape de lavage.

2. Capuchon en résine synthétique enfermé dans un sachet stérilisable, obtenu avec le procédé selon la revendication 1.
